# EUROPÄISCHE PATENTANMELDUNG

(11) **EP 3 148 034 A1**
(43) Veröffentlichungstag der Anmeldung: **29.03.2017**
(21) Anmeldenummer: 15187207.4
(22) Anmeldetag: 28.09.2015
(51) Int. Cl.: H02J 3/12, H02J 3/00

(54) **STEUEREINHEIT FÜR EINEN ELEKTRISCHEN VERBRAUCHER, ELEKTRISCHE VERBRAUCHER UND SCHALTUNGSANORDNUNG MIT EINER ELEKTRISCHEN STEUEREINHEIT UND VERWENDUNG DER STEUEREINHEIT**

(71) Anmelder: AEG Power Solutions GmbH, 59581 Warstein-Belecke (DE)
(72) Erfinder: Kempen, Dr. Stefan, 59821 Arnsberg (DE); Vogt, Thorsten, 59929 Brilon (DE)
(74) Vertreter: Graefe, Jörg

(57) **Zusammenfassung**

Steuermittel (1) für wenigstens einen elektrischen Verbraucher (2) mit im Wesentlichen ohmschem Verhalten
- mit einem Eingang (11) zur Verbindung mit einem Stromnetz (N),
- mit einem Sensor zur Erfassung der am Eingang (11) anliegenden Spannung,
- mit einer Steuereinheit zur Ermittlung einer Information über eine zukünftige Wirkleistungsaufnahme des wenigstens einen elektrischen Verbrauchers (2) mit im Wesentlichen ohmschem Verhalten,
- wobei die Steuereinheit eine Schnittstelle zur Bereitstellung der Information hat,

wobei
- mittels der Steuereinheit bei Erfassung eines Anstiegs der Spannung am Eingang (11) gegenüber einem Referenzwert die Information eine erhöhte Wirkleistungsaufnahme des wenigstens einen Verbrauchers (2) mit im Wesentlichen ohmschem Verhalten vorsieht, die über die Erhöhung aufgrund einer quadratischen Abhängigkeit zwischen der Spannung und der Wirkleistung hinausgeht, und/oder
- dass mittels der Steuereinheit bei Erfassung eines Sinkens der Spannung am Eingang (11) gegenüber dem Referenzwert die Information eine abgesenkte Wirkleistungsaufnahme des wenigstens einen Verbrauchers (2) mit im Wesentlichen ohmschem Verhalten vorsieht, die über die Absenkung aufgrund einer quadratischen Abhängigkeit zwischen der Spannung und der Wirkleistung hinausgeht.

## Beschreibung

Die vorliegende Erfindung betrifft
- eine Steuereinheit für einen elektrischen Verbraucher mit den Merkmalen des Oberbegriffs des Anspruchs 1,
- eine Schaltungsanordnung mit einer elektrischen Steuereinheit mit den Merkmalen des Oberbegriffs des Anspruchs 8,
- einen elektrischen Verbraucher mit den Merkmalen des Oberbegriffs des Anspruchs 10 und
- eine Verwendung einer Steuereinheit.

Nach der Lehre des Dokumentes DE 10 2008 048 A1 erfolgt bei ohmschen Verbrauchern automatisch eine Anpassung der Leistungsanpassung. Da bei elektrischen Verbrauchern mit einem ohmschen Lastverhalten eine dem Übertragungsnetz entnommene Leistung quadratisch von der elektrischen Spannung des Übertragungsnetzes abhängt, erhöht oder verringert sich die Leistungsentnahme bei einem Überangebot oder einem Unterangebot von elektrischer Energie in dem Übertragungsnetz automatisch.

Aus dem Dokument DE 10 2008 048 A1 ist es bekannt, eine Steuereinheit zwischen ein Übertragungsnetz und einen elektrischen Verbraucher zu schalten. Diese Steuereinheit weist Mittel zur Erfassung der Netzspannung und/oder der Netzfrequenz des Übertragungsnetzes auf. Mittels der Steuereinheit kann eine elektrische Leistungsentnahme des Verbrauchers aus dem Übertragungsnetz in Abhängigkeit von der erfassten Netzspannung und/oder Netzfrequenz gesteuert werden. Die Steuereinheit kann in elektrischen Verbrauchern oder als separates Vorschaltgerät vorgesehen sein. Vorgesehen ist die Steuereinheit für Verbraucher mit nicht ohmschem Verhalten, insbesondere solche Verbraucher, die bei unterschiedlichen Netzspannungen und Netzfrequenzen eine konstante Leistungsentnahme aus dem Netz aufweisen. Dabei kann es sich zum Beispiel um Verbraucher mit Schaltnetzteilen und/oder Wechselrichter handeln.

Die aus dem Dokument DE 10 2008 048 046 A1 bekannte Steuereinheit soll es ermöglichen, dass auch Verbraucher, die kein ohmsches Verhalten haben, derart steuerbar sind, dass ein ohmsches Verhalten erzeugt wird.

Die so gestaltete Steuereinheit nutzt damit das Potential von Verbrauchern mit nicht ohmschem Verhalten dazu, einem Unterangebot oder einem Überangebot von Energie im Übertragungsnetz entgegenzuwirken.

Gesucht wird nun eine Lösung, die darüber hinaus geht und weitere Möglichkeiten erschließt, bei einem Überangebot elektrischer Energie im Netz dem Netz viel zu entnehmen und bei einem Unterangebot elektrischer Energie im Netz dem Netz wenig zu entnehmen.

Hier setzt die Erfindung an.

Die erfindungsgemäße Lösung sieht vor,
- dass mittels der Steuereinheit bei Erfassung eines Anstiegs der Spannung an einem Eingang der Steuereinheit gegenüber einem Referenzwert eine von einem Steuermittel der Steuereinheit ermittelte Information über eine zukünftige Wirkleistungsaufnahme des wenigstens einen elektrischen Verbrauchers mit im Wesentlichen ohmschem Verhalten eine erhöhte Wirkleistungsaufnahme des wenigstens einen Verbrauchers mit im Wesentlichen ohmschem Verhalten vorsieht, die über die Erhöhung aufgrund einer quadratischen Abhängigkeit zwischen der Spannung und der Wirkleistung hinausgeht, und/oder
- dass mittels der Steuereinheit bei Erfassung eines Sinkens der Spannung am Eingang gegenüber dem Referenzwert eine von einem Steuermittel der Steuereinheit ermittelte Information über eine zukünftige Wirkleistungsaufnahme des wenigstens einen elektrischen Verbrauchers mit im Wesentlichen ohmschem Verhalten eine abgesenkte Wirkleistungsaufnahme des wenigstens einen Verbrauchers mit im Wesentlichen ohmschem Verhalten vorsieht, die über die Erhöhung aufgrund einer quadratischen Abhängigkeit zwischen der Spannung und der Wirkleistung hinausgeht.

Mit der erfindungsgemäßen Lösung ist es möglich, bei einer Änderung der Spannung im Stromnetz eine Information über eine Wirkleistung zu generieren, um die Wirkleistung der Verbraucher mit im Wesentlichen ohmschem Verhalten anzupassen. Die generierte Information steht für eine Wirkleistung, die gegenüber einer Wirkleistung hinaus geändert ist, die sich automatisch aufgrund der Spannungsänderung ergibt. Diese Wirkleistung ist bei einer Spannungsabsenkung im Stromnetz kleiner als die sich automatisch einstellende Wirkleistung und bei einer Spannungserhöhung im Stromnetz größer als die sich automatisch einstellende Wirkleistung.

Damit ist es möglich, diese Information zu nutzen, um einem Energieüberangebot bzw. einem Energieunterangebot entgegen zu wirken.

Die Information kann eine Richt-Wirkleistungsaufnahme und/oder eine Richt-Änderung der Wirkleistungsaufnahme und/oder ein Vorzeichen der Richt-Änderung der Wirkleistungsaufnahme und/oder Ähnliches vorgeben. Gemäß dieser Richtwerte oder -vorzeichen können dann die Verbraucher eingestellt werden. Dabei ist es nicht notwendig, dass die tatsächliche Wirkleistungsaufnahme und/oder die tatsächliche Änderung der Wirkleistungsaufnahme und/oder das Vorzeichen der tatsächlichen Änderung der Wirkleistungsaufnahme für den wenigstens einen Verbraucher mit im Wesentlichen ohmschem Verhalten übernommen wird. Die tatsächliche Einstellung des Verbrauchers kann von der Richtinformation abweichen. Das kann insbesondere der Fall sein, wenn der Verbraucher von anderen Vorgaben nicht abweichen kann und zum Beispiel eine Mindest- oder Maximal-Wirkleistung nicht unter- oder überschreiten. In dem Verbraucher kann sogar vorgesehen sein, dass eine Einstellung zu einem beliebigen Zeitpunkt genau entgegen der Richt-Informationen erfolgt, falls es für einen ordnungsgemäßen Betrieb des Verbrauchers nötig ist.

Ebenso ist es möglich, dass die Information eine Soll-Wirkleistungsaufnahme und/oder eine Soll-Änderung der Wirkleistungsaufnahme und/oder ein Vorzeichen der Soll-Änderung der Wirkleistungsaufnahme und/oder Ähnliches vorgibt. Dann müssen die von den erfindungsgemäßen Steuermitteln ermittelten Informationen eingehalten werden. Ein Abweichen ist dann nicht zulässig.

Ein erfindungsgemäßes Steuermittel kann einen Ausgang aufweisen und es kann zwischen dem Eingang und dem Ausgang wenigstens eine Einheit zum Einstellen der Wirkleistungsaufnahme aufweisen, die mit der Schnittstelle zur Bereitstellung der Informationen verbunden ist. Mit einem solchen Steuermittel ist dann nicht nur die Ermittlung der Information zum Einstellen der Wirkleistungsaufnahme möglich. Über die wenigstens eine Einheit zum Einstellen der Wirkleistungsaufnahme kann auch unmittelbar Einfluss auf die elektrischen Größen an einem Eingang des wenigstens einen Verbrauchers genommen werden. Das ist insbesondere dann sinnvoll, wenn der Verbraucher nicht geeignet und eingerichtet ist, seine Wirkleistungsaufnahme einzustellen, um damit einem Überangebot oder einem Unterangebot elektrische Energie entgegenzuwirken.

Die wenigstens eine Einheit zum Einstellen der Wirkleistungsaufnahme kann ein Leistungssteller, ein Umrichter oder Ähnliches sein. Die Leistungssteller können eine Phasenanschnittsteuerung, eine Amplitudenregelung oder eine Pulspaketsteuerung zur Einstellung der Leistungsaufnahme aufweisen. Ist die am Eingang anliegende Spannung eine Gleichspannung, ist auch eine Pulsweitenmodulation oder ein ähnliches Verfahren zur Verringerung der im Verbraucher umgesetzten Wirkleistung anwendbar.

Ein erfindungsgemäßes Steuermittel kann einen Speicher aufweisen, in dem eine zeitliche Folge von Referenzwerten für die am Eingang anlegbare Spannung gespeichert ist. Die Referenzwerte geben vorzugsweise den Verlauf der Nennspannung des Stromnetzes wieder. Der Speicher kann dann zur Laufzeit des Steuermittels ausgelesen werden, so dass der Referenzwert mit der anliegenden Spannung verglichen werden kann. Stellt das Steuermittel eine Abweichung der anliegenden Spannung vom Referenzwert fest, liegt ein Überangebot oder ein Unterangebot elektrischer Energie vor, das ausgeglichen werden soll.

Das Steuermittel kann wahlweise oder zusätzlich einen Speicher aufweisen, in dem eine Rechenregel gespeichert ist, nach der in Abhängigkeit von einer Zeit ein Referenzwert berechnet werden kann. Zur Laufzeit des Steuermittels kann für den Vergleich der einem Zeitpunkt des Vergleichs zugeordnete Referenzwert mittels der Rechenregel berechnet und anschließend mit dem Wert der anliegenden Spannung verglichen werden.

Erfindungsgemäß wird ferner eine elektrische Schaltungsanordnung mit einem erfindungsgemäßen Steuermittel und wenigstens einem Verbraucher mit im Wesentlichen ohmschem Verhalten vorgeschlagen, wobei der Verbraucher einen Eingang hat, der an den Ausgang des Steuermittels angeschlossen ist und das Steuermittel an seinem Ausgang eine Wirkleistung bereitstellt, die von dem einen Verbraucher aufgenommen wird. Der Eingang des Steuermittels kann mit einem Anschluss eines Stromnetzes verbunden werden. Die von dem Verbraucher umgesetzte Wirkleistung kann durch das Steuermittel gesteuert werden, um auf ein Überangebot oder ein Unterangebot, also auf einen Mangel an elektrischer Energie, zu reagieren und diesem entgegenzuwirken.

Erfindungsgemäß kann ebenso ein elektrischer Verbraucher mit im Wesentlichen ohmschem Verhalten vorgesehen sein, der ein erfindungsgemäßes Steuermittel aufweist, welches die Wirkleistungsaufnahme des Verbrauchers steuert, zum Beispiel einen ohmschen Widerstand des Verbrauchers ändert. Der Verbraucher könnte zur Steuerung der Wirkleistungsaufnahme des elektrischen Verbrauchers auch eine Einheit zum Einstellen der Wirkleistungsaufnahme aufweisen. Diese kann ein Leistungssteller, ein Umrichter oder Ähnliches sein. Der Leistungssteller könnte eine Phasenanschnittsteuerung, eine Amplitudenregelung oder eine Pulspaketsteuerung zur Einstellung der Leistungsaufnahme aufweisen. Ist die am Eingang anliegende Spannung eine Gleichspannung, ist auch eine Pulsweitenmodulation oder ein ähnliches Verfahren zur Verringerung der im Verbraucher umgesetzten Wirkleistung anwendbar.

Außerdem kann erfindungsgemäß eine elektrische Schaltungsanordnung vorgesehen sein, die ein erfindungsgemäßes Steuermittel und wenigstens einen Verbraucher mit im Wesentlichen ohmschem Verhalten aufweist,
- wobei der Eingang des Steuermittels mit einem Anschluss eines Stromnetzes mit Verbrauchern mit im Wesentlichen ohmschem Verhalten verbunden ist,
- wobei eine Schnittstelle des wenigstens einen Verbrauchers mit im Wesentlichen ohmschem Verhalten für ein Informationssignal mit der Schnittstelle zur Bereitstellung der Information des Steuermittels verbunden ist und
- wobei mittels des Informationssignals die Wirkleistungsaufnahme des Verbrauchers mit im Wesentlichen ohmschem Verhalten steuerbar, insbesondere der ohmsche Widerstand des Verbrauchers änderbar ist.

Bei einer solchen erfindungsgemäßen elektrischen Schaltungsanordnung kann der wenigstens eine Verbraucher wenigstens eine Einheit zum Einstellen der Wirkleistungsaufnahme aufweisen, die mit der Schnittstelle für das Informationssignal verbunden ist.

Ein erfindungsgemäßes Steuermittel kann
- in einer erfindungsgemäßen Schaltungsanordnung,
- in einem erfindungsgemäßen Verbraucher mit im Wesentlichen ohmschem Verhalten oder
- in einer erfindungsgemäßen elektrischen Schaltungsanordnung
in einer elektrischen Anlage, die an eine Stromnetz, insbesondere ein Netz in einem Inselbetrieb oder ein Gleichspannungsnetz, mit Verbraucher mit im Wesentlichen ohmschem Verhalten angeschlossen sein.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen:
- Fig. 1: eine erfindungsgemäße elektrische Schaltungsanordnung mit einem erfindungsgemäßen Steuermittel und einem Verbraucher mit im Wesentlichen ohmschem Verhalten und
- Fig. 2: einen erfindungsgemäßen Verbraucher mit einem im Wesentlichen ohmschem Verhalten umfassend ein erfindungsgemäßes Steuermittel.

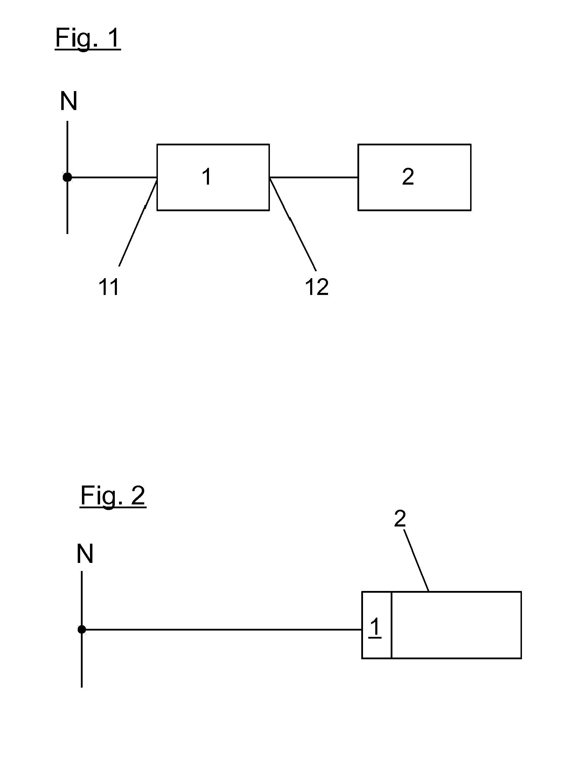

Die in der Figur 1 dargestellte Schaltungsanordnung ist an ein einphasiges Stromnetz N angeschlossen. Die erfindungsgemäße Steuereinheit 1 weist einen Eingang 11 auf, der den Anschluss zum Stromnetz N herstellt. An einen Ausgang 12 des Steuermittels ist der Verbraucher 2 angeschlossen. Das Stromnetz N ist ein Wechselspannungsnetz mit im Wesentlichen ohmschen Verbrauchern. Der Verbraucher 2 ist ein ohmscher Verbraucher.

Das Steuermittel 1 umfasst einen Leistungssteller, der mit dem Eingang 11 und dem Ausgang 12 verbunden ist und mittels dem die vom Eingang 11 zum Ausgang 12 und damit vom Netz N zum Verbraucher 2 übertragene Energie eingestellt werden kann. Das Steuermittel 1 umfasst ferner eine Steuereinheit mit der eine Soll-Wirkleistung vorgegeben werden kann, die von dem Verbraucher 2 umgesetzt werden kann. Die Soll-Wirkleistung wird entsprechend dem Angebot an elektrischer Energie im Netz N festgelegt. Herrscht ein Überangebot an elektrischer Energie - was sich durch eine Abweichung der Netzspannung über die Nennspannung nach oben bemerkbar macht - wird die Wirkleistung des Verbrauchers 2 so erhöht, dass mehr Energie aus dem Netz N entnommen wird, als sich aufgrund der quadratischen Abhängigkeit der Leistung von der Netzspannung ergibt. Herrscht dagegen ein Mangel an elektrischer Energie - was sich durch eine Abweichung der Netzspannung über die Nennspannung nach unten bemerkbar macht - wird die Wirkleistung des Verbrauchers 2 so herabgesetzt, dass weniger Energie aus dem Netz N entnommen wird, als sich aufgrund der quadratischen Abhängigkeit der Leistung von der Netzspannung ergibt. Dadurch wird das erreicht, was man als das Stromnetz stabilisierende Wirkung bezeichnet.

Gleiches kann erreicht werden, wenn das Steuermittel 1 integraler Teil des Verbrauchers 2 ist, was in der Fig. 2 dargestellt ist.

## Patentansprüche

1. Steuermittel (1) für wenigstens einen elektrischen Verbraucher mit im Wesentlichen ohmschem Verhalten
- mit einem Eingang (11) zur Verbindung mit einem Stromnetz (N),
- mit einem Sensor zur Erfassung der am Eingang anliegenden Spannung,
- mit einer Steuereinheit zur Ermittlung einer Information über eine zukünftige Wirkleistungsaufnahme des wenigstens einen elektrischen Verbrauchers mit im wesentlichen ohmschem Verhalten,
- wobei die Steuereinheit eine Schnittstelle zur Bereitstellung der Information hat,
**dadurch gekennzeichnet,**
- **dass** mittels der Steuereinheit bei Erfassung eines Anstiegs der Spannung am Eingang gegenüber einem Referenzwert die Information eine erhöhte Wirkleistungsaufnahme des wenigstens einen Verbrauchers mit im wesentlichen ohmschem Verhalten vorsieht, die über die Erhöhung aufgrund einer quadratischen Abhängigkeit zwischen der Spannung und der Wirkleistung hinausgeht, und/oder
- **dass** mittels der Steuereinheit bei Erfassung eines Sinkens der Spannung am Eingang gegenüber dem Referenzwert die Information eine abgesenkte Wirkleistungsaufnahme des wenigstens einen Verbrauchers mit im Wesentlichen ohmschem Verhalten vorsieht, die über die Absenkung aufgrund einer quadratischen Abhängigkeit zwischen der Spannung und der Wirkleistung hinausgeht.

2. Steuermittel (1) nach Anspruch 1, **dadurch gekennzeichnet, dass** die Information eine Richt-Wirkleistungsaufnahme und/oder eine Richt-Änderung der Wirkleistungsaufnahme und/oder ein Vorzeichen der Richt-Änderung der Wirkleistungsaufnahme und/oder Ähnliches vorgibt.

3. Steuermittel (1) nach Anspruch 1 oder 2, **dadurch gekennzeichnet, dass** die Information eine Soll-Wirkleistungsaufnahme und/oder eine Soll-Änderung der Wirkleistungsaufnahme und/oder ein Vorzeichen der Soll-Änderung der Wirkleistungsaufnahme und/oder Ähnliches vorgibt.

4. Steuermittel (1) nach einem der Ansprüche 1 bis 3, **dadurch gekennzeichnet, dass** das Steuermittel (1) einen Ausgang (12) aufweist und dass das Steuermittel (1) zwischen dem Eingang (11) und dem Ausgang (12) wenigstens eine Einheit zum Einstellen der Wirkleistungsaufnahme aufweist, die mit der Schnittstelle zur Bereitstellung der Informationen verbunden ist.

5. Steuermittel (1) nach Anspruch 4, **dadurch gekennzeichnet, dass** die wenigstens eine Einheit zum Einstellen der Wirkleistungsaufnahme ein Leistungssteller, ein Umrichter oder Ähnliches ist.

6. Steuermittel (1) nach einem der Ansprüche 1 bis 5, **dadurch gekennzeichnet, dass** das Steuermittel (1) einen Speicher aufweist, in dem eine zeitliche Folge von Referenzwerten für die am Eingang (11) anlegbare Spannung gespeichert sind, und dass zur Laufzeit des Steuermittels (1) für den Vergleich der einem Zeitpunkt des Vergleichs zugeordnete Referenzwert auslesbar ist.

7. Steuermittel (1) nach einem der Ansprüche 1 bis 5, **dadurch gekennzeichnet, dass** das Steuermittel (1) einen Speicher aufweist, in dem eine Rechenregel gespeichert ist, nach der in Abhängigkeit von einer Zeit ein Referenzwert berechenbar ist, und dass zur Laufzeit des Steuermittels (1) für den Vergleich der einem Zeitpunkt des Vergleichs zugeordnet Referenzwert mittels der Rechenregel berechenbar ist.

8. Elektrische Schaltungsanordnung, **dadurch gekennzeichnet, dass** sie ein Steuermittel (1) nach Anspruch 4 oder 5 aufweist und wenigstens einen Verbraucher (2) mit im Wesentlichen ohmschem Verhalten aufweist, wobei der Verbraucher (2) einen Eingang hat, der an den Ausgang (12) des Steuermittels (1) angeschlossen ist und das Steuermittel (1) an seinem Ausgang (12) eine Wirkleistung bereitstellt, die von dem einen Verbraucher (2) aufgenommen wird.

9. Elektrische Schaltungsanordnung nach Anspruch 8, **dadurch gekennzeichnet**, das der Eingang (11) des Steuermittels (1) mit einem Anschluss eines Stromnetzes (N) verbunden ist.

10. Elektrischer Verbraucher (2) mit im Wesentlichen ohmschem Verhalten, **dadurch gekennzeichnet, dass** der Verbraucher ein Steuermittel (1) nach einem der Ansprüche 1 bis 7 aufweist, welches die Wirkleistungsaufnahme des Verbrauchers (2) steuert, insbesondere einen ohmschen Widerstand des Verbrauchers (2) ändert.

11. Elektrische Schaltungsanordnung, **dadurch gekennzeichnet, dass** sie ein Steuermittel (1) nach einem der Ansprüche 1 bis 7 und wenigstens einen Verbraucher (2) mit im Wesentlichen ohmschem Verhalten aufweist,
- wobei der Eingang (11) des Steuermittels (1) mit einem Anschluss eines Stromnetzes (N) mit Verbrauchern mit im Wesentlichen ohmschem Verhalten verbunden ist,
- wobei eine Schnittstelle des wenigstens einen Verbrauchers (2) mit im Wesentlichen ohmschem Verhalten für ein Informationssignal mit der Schnittstelle zur Bereitstellung der Information des Steuermittels (1) verbunden ist und
- wobei mittels des Informationssignals die Wirkleistungsaufnahme des Verbrauchers (2) mit im Wesentlichen ohmschem Verhalten steuerbar, insbesondere der ohmsche Widerstand des Verbrauchers (2) änderbar ist.

12. Elektrische Schaltungsanordnung nach Anspruch 11, **dadurch gekennzeichnet, dass** der wenigstens eine Verbraucher (2) wenigstens eine Einheit zum Einstellen der Wirkleistungsaufnahme aufweist, die mit der Schnittstelle für das Informationssignal verbunden ist.

13. Verwendung eines Steuermittels (1) nach einem der Ansprüche 1 bis 7
- in einer Schaltungsanordnung nach Anspruch 8 oder 9,
- in einem im Wesentlichen ohmschen Verbraucher mit im Wesentlichen ohmschem Verhalten nach Anspruch 10 oder
- in einer elektrischen Schaltungsanordnung nach Anspruch 11 oder 12,
- in einer elektrischen Anlage,
die an ein Stromnetz, insbesondere ein Netz in einem Inselbetrieb oder ein Gleichspannungsnetz, mit Verbraucher mit im Wesentlichen ohmschem Verhalten angeschlossen ist.

## Geänderte Patentansprüche

### Geänderte Patentansprüche gemäss Regel 137(2) EPÜ.

1. Steuermittel (1) für wenigstens einen elektrischen Verbraucher mit im Wesentlichen ohmschem Verhalten
- mit einem Eingang (11) zur Verbindung mit einem Stromnetz (N),
- mit einem Sensor zur Erfassung der am Eingang anliegenden Spannung,
- mit einer Steuereinheit zur Ermittlung einer Information über eine zukünftige Wirkleistungsaufnahme des wenigstens einen elektrischen Verbrauchers mit im wesentlichen ohmschem Verhalten,
- wobei die Steuereinheit eine Schnittstelle zur Bereitstellung der Information hat,
**dadurch gekennzeichnet,**
- **dass** mittels der Steuereinheit bei Erfassung eines Anstiegs der Spannung am Eingang gegenüber einem Referenzwert die Information eine erhöhte Wirkleistungsaufnahme des wenigstens einen Verbrauchers mit im wesentlichen ohmschem Verhalten vorsieht, die über die Erhöhung aufgrund einer quadratischen Abhängigkeit zwischen der Spannung und der Wirkleistung hinausgeht, und/oder
- **dass** mittels der Steuereinheit bei Erfassung eines Sinkens der Spannung am Eingang gegenüber dem Referenzwert die Information eine abgesenkte Wirkleistungsaufnahme des wenigstens einen Verbrauchers mit im Wesentlichen ohmschem Verhalten vorsieht, die über die Absenkung aufgrund einer quadratischen Abhängigkeit zwischen der Spannung und der Wirkleistung hinausgeht.

2. Steuermittel (1) nach Anspruch 1 , **dadurch gekennzeichnet, dass** die Information eine Richt-Wirkleistungsaufnahme und/oder eine Richt-Änderung der Wirkleistungsaufnahme und/oder ein Vorzeichen der Richt-Änderung der Wirkleistungsaufnahme vorgibt.

3. Steuermittel (1) nach Anspruch 1 oder 2, **dadurch gekennzeichnet, dass** die Information eine Soll-Wirkleistungsaufnahme und/oder eine Soll-Änderung der Wirkleistungsaufnahme und/oder ein Vorzeichen der Soll-Änderung der Wirkleistungsaufnahme vorgibt.

4. Steuermittel (1) nach einem der Ansprüche 1 bis 3, **dadurch gekennzeichnet, dass** das Steuermittel (1) einen Ausgang (12) aufweist und dass das Steuermittel (1) zwischen dem Eingang (11) und dem Ausgang (12) wenigstens eine Einheit zum Einstellen der Wirkleistungsaufnahme aufweist, die mit der Schnittstelle zur Bereitstellung der Informationen verbunden ist.

5. Steuermittel (1) nach Anspruch 4, **dadurch gekennzeichnet, dass** die wenigstens eine Einheit zum Einstellen der Wirkleistungsaufnahme ein Leistungssteller oder ein Umrichter ist.

6. Steuermittel (1) nach einem der Ansprüche 1 bis 5, **dadurch gekennzeichnet, dass** das Steuermittel (1) einen Speicher aufweist, in dem eine zeitliche Folge von Referenzwerten für die am Eingang (11) anlegbare Spannung gespeichert sind, und dass zur Laufzeit des Steuermittels (1) für den Vergleich der einem Zeitpunkt des Vergleichs zugeordnete Referenzwert auslesbar ist.

7. Steuermittel (1) nach einem der Ansprüche 1 bis 5, **dadurch gekennzeichnet, dass** das Steuermittel (1) einen Speicher aufweist, in dem eine Rechenregel gespeichert ist, nach der in Abhängigkeit von einer Zeit ein Referenzwert berechenbar ist, und dass zur Laufzeit des Steuermittels (1) für den Vergleich der einem Zeitpunkt des Vergleichs zugeordnet Referenzwert mittels der Rechenregel berechenbar ist.

8. Elektrische Schaltungsanordnung, **dadurch gekennzeichnet, dass** sie ein Steuermittel (1) nach Anspruch 4 oder 5 aufweist und wenigstens einen Verbraucher (2) mit im Wesentlichen ohmschem Verhalten aufweist, wobei der Verbraucher (2) einen Eingang hat, der an den Ausgang (12) des Steuermittels (1) angeschlossen ist und das Steuermittel (1) an seinem Ausgang (12) eine Wirkleistung bereitstellt, die von dem einen Verbraucher (2) aufgenommen wird.

9. Elektrische Schaltungsanordnung nach Anspruch 8, **dadurch gekennzeichnet**, das der Eingang (11) des Steuermittels (1) mit einem Anschluss eines Stromnetzes (N) verbunden ist.

10. Elektrischer Verbraucher (2) mit im Wesentlichen ohmschem Verhalten, **dadurch gekennzeichnet, dass** der Verbraucher ein Steuermittel (1) nach einem der Ansprüche 1 bis 7 aufweist, welches die Wirkleistungsaufnahme des Verbrauchers (2) steuert, insbesondere einen ohmschen Widerstand des Verbrauchers (2) ändert.

11. Elektrische Schaltungsanordnung, **dadurch gekennzeichnet, dass** sie ein Steuermittel (1) nach einem der Ansprüche 1 bis 7 und wenigstens einen Verbraucher (2) mit im Wesentlichen ohmschem Verhalten aufweist,
- wobei der Eingang (11) des Steuermittels (1) mit einem Anschluss eines Stromnetzes (N) mit Verbrauchern mit im Wesentlichen ohmschem Verhalten verbunden ist,
- wobei eine Schnittstelle des wenigstens einen Verbrauchers (2) mit im Wesentlichen ohmschem Verhalten für ein Informationssignal mit der Schnittstelle zur Bereitstellung der Information des Steuermittels (1) verbunden ist und
- wobei mittels des Informationssignals die Wirkleistungsaufnahme des Verbrauchers (2) mit im Wesentlichen ohmschem Verhalten steuerbar, insbesondere der ohmsche Widerstand des Verbrauchers (2) änderbar ist.

12. Elektrische Schaltungsanordnung nach Anspruch 11, **dadurch gekennzeichnet, dass** der wenigstens eine Verbraucher (2) wenigstens eine Einheit zum Einstellen der Wirkleistungsaufnahme aufweist, die mit der Schnittstelle für das Informationssignal verbunden ist.

13. Verwendung eines Steuermittels (1) nach einem der Ansprüche 1 bis 7
- in einer Schaltungsanordnung nach Anspruch 8 oder 9,
- in einem im Wesentlichen ohmschen Verbraucher mit im Wesentlichen ohmschem Verhalten nach Anspruch 10 oder
- in einer elektrischen Schaltungsanordnung nach Anspruch 11 oder 12,
- in einer elektrischen Anlage,
die an ein Stromnetz, insbesondere ein Netz in einem Inselbetrieb oder ein Gleichspannungsnetz, mit Verbraucher mit im Wesentlichen ohmschem Verhalten angeschlossen ist.
